# EUROPÄISCHE PATENTSCHRIFT

(11) **EP 0 573 643 B1**
(45) Veröffentlichungstag und Bekanntmachung des Hinweises auf die Patenterteilung: **05.03.1997**
(21) Anmeldenummer: 93901644.0
(22) Anmeldetag: 22.12.1992
(51) Int. Cl.: F16B 23/00

(54) **BEFESTIGUNGSELEMENT MIT GEWINDE, INSBESONDERE SCHRAUBE, UND SCHRAUBWERKZEUG**
THEADED FIXATION ELEMENT, IN PARTICULAR A SCREW, AND SCREW TOOL
ELEMENT DE FIXATION A FILET, PAR EXAMPLE VIS, ET OUTIL DE VISSAGE

(30) Priorität: 04.01.1992 GB 9200093
(43) Veröffentlichungstag der Anmeldung: 15.12.1993
(73) Patentinhaber: RICHARD BERGNER GMBH & CO, 91124 Schwabach (DE)
(72) Erfinder: GILL, Peter, John, Codsall Wolverhampton WV8 1HT (GB)
(74) Vertreter: Tergau, Enno, Dipl.-Ing.
(86) Internationale Anmeldenummer: DE9201078
(87) Internationale Veröffentlichungsnummer: WO9313323

(56) Entgegenhaltungen:
- DE-A- 3 911 409
- FR-A- 2 314 645
- GB-A- 2 027 151
- US-A- 2 046 343
- US-A- 2 445 525

## Beschreibung

Die Erfindung betriffl zunächst ein mit Gewinde und einem Betätigungsende versehenes Befestigungselement, das einen Kopf besitzt, der koaxial zur Gewindeachse angeordnet ist und dessen Durchmesser über den Gewindedurch-messer des Befestigungselementes hinausragt sowie eine zentrisch im Kopf angeordnete Ausnehmung zur Übertragung innerer Kräfte.

Die Ausnehmungen bzw. Innen-Kraftangriffe bekannter derartiger Schrauben, die für die Kraft-Übertragung von innen her angelegt sind, sind symmetrisch gestaltet. Ihre Symmetrieachse ist die Achse des Schraubengewindes. Die Innen-Kraftangriffe bekannter Schrauben dieser Art haben unterschiedliche Formen. Sie können kreuzförmig, sechseckig, quadratisch, rechteckig oder kreisförmig mit gekerbter Verzahnung, keilförmiger Verzahnung oder bogenförmiger Verzahnung gestaltet sein.

Es ist bekannt, daß bedeutende Verbesserungen hinsichtlich der Sicherung von Schrauben gegen Lösen und in bezug auf ihre Dauerschwingfestigkeit erzielt werden, wenn sie auf das höchstmögliche Niveau ihrer Vorspannkraft vorge-spannt werden, d.h. bis in die Nähe der Bruchkraft des Schraubenschaftes.

Bei vielen der bekannten Kraftübertragungsformen von Schrauben kann diese hohe Vorspannkraft nicht erreicht werden, weil das Anziehdrehmoment begrenzt ist. Diese Begrenzung des Anziehdrehmoments hat zum Beispiel folgende mechanische Ursachen: Ausschaben des Innen-Kraftangriffs, Abreißen des Kopfes wegen unzureichender Tragfähigkeit der Scherfläche zwischen dem Boden des Innenkraftangriffs und dem Schraubenschaft und Bruch des Anziehwerkzeugs, d.h. des Schraubendrehers.

Ein wichtiger Grund für die Beschränkung der Vorspannkraft bei konventionellen Schrauben dieser Art besteht auch darin, daß der Schraubendreher wegen der während des Anziehvorgangs wirkenden axialen Kräfte axial aus dem Innen-Kraftangriff des Schraubenkopfes herausgedrückt wird. Dieser Rückschubeffekt ist das Ergebnis von Reaktionskräften zwischen dem Schraubendreher und dem Innen-Kraftangriff, d.h. er ist letztlich das Ergebnis des aufgebrachten Anzieh-drehmoments.

Ein weiterer Nachteil der meisten Formen von Innen-Kraftangriffen von Schrauben besteht darin, daß zum Eindrehen von Schrauben unterschiedlicher Nenndurchmesser unterschiedliche Werkzeuge erforderlich sind.

Beispielsweise werden für die Montage der vielen verschiedenen Typen konventioneller Kreuzschlitzschrauben im Nenndurchmesserbereich von 1,6 bis 10 mm fünf unterschiedliche Größen von Schraubendrehern benötigt. Vielfach benötigt jede Schraubengröße eine speziell auf sie abgestimmte Schraubendrehergröße.

Durch US-A-2 445 525 sind ein Befestigungselement, z.B. eine Schraube, mit den im Oberbegriff des Anspruches 1 genannten Merkmalen sowie ein zugehöriges Schraubwerkzeug bekannt. Die bekannte Schraube weist zu einem Innen-Kraftangriff durch das Schraubwerkzeug eine zentrale Ausnehmung mit radial nach außen ragenden Schlitzen auf. Die Schlitze sind durch radial nach innen ragende Rippen voneinander getrennt. Die inneren Enden dieser Rippen weisen eine konvexe, das Segment eines Kegelmantels bildende Form auf, deren Breite und Krümmungsradius vom einen zum anderen Rippenende variiert. Dadurch wird die Fertigung eines Werkzeugstempels zur Herstellung des Innen-Kraftangriffes erschwert. Ein besonderer Nachteil ergibt sich jedoch durch die entsprechende Formgebung der Rippen beim zugehörigen Schraubendreher. Dieser weist nämlich in seinem zentralen Mittelstück zwischen seinen Flügeln einen konkaven Grund mit relativ kleinem Durchmesser seines eingeschriebenen Hüllkreises auf, was zur Verringerung seiner Torsionsfestigkeit führt.

Ein Ziel der Erfindung ist es, Befestigungselemente, insbesondere Schrauben der oben erwähnten Art, mit einer neuartigen Geometrie des Innen-Kraftangriffs zu versehen, mit dem die axialen Rückschubkräfte minimiert werden, selbst wenn ein sehr hohes Anziehdrehmoment beim Montagevorgang aufgebracht wird. Dies würde es dem Schraubendreher ermöglichen, eine Vorspannkraft zu erzeugen, die nahe an die Bruchkraft des Schraubenschaftes heranreicht.

Dieses Problem wird durch Anspruch 1 gelöst. Aufgrund dieser Lösung werden axiale Reaktionskräfte minimiert. Ein weiterer Vorteil besteht darin, daß diese Geometrie des Innen-Kraftangriffs in gleicher Weise für Schrauben jeglicher Größe eingesetzt werden kann, so daß alle Schrauben mit dem gleichen Schraubwerkzeug angezogen werden können.

Die Ansprüche 2 und 3 erleichtern die Realisierung der obigen Zielsetzungen gemäß Anspruch 1 in bezug auf die Fertigungstechnologie und die universelle Aufnahme des Montagewerkzeugs.

Die hier verwendeten Schrägungswinkel der einzelnen Schlitzflanken, die im Hinblick auf die Schraubenachse im Bereich von 1,5° bis 2° liegen, sind bezüglich der geforderten Verhinderung von axialen Reaktionskräften allgemein und im wesentlichen vernachlässigbar.

Die zwischen den Schlitzen liegenden Umfangsflächen der Zentralausnehmung haben für die Übertragung des Anziehdrehmoments keine wesentliche Bedeutung. Sie müssen jedoch so gestaltet werden, daß sie den Eingriff des Schraubendrehers zur Übertragung des Anziehdrehmoments nicht behindern, d.h. daß sie die Wechselwirkung zwischen Schraubendreher und Innenkanten nicht verhindern.

Alle Flächen des Innen-Kraftangriffs konvergieren zu einem gemeinsamen Punkt "P" auf der Schraubenachse. Punkt "P" kann innerhalb des Schraubenkopfes liegen. Dadurch wird eine erhöhte Tragfähigkeit der Schraube sichergestellt.

Der Punkt "P" auf der Gewindeachse, der in den Ansprüchen 4 und 5 erwähnt ist, muß nicht konkret im Innen-Kraftangriffs in Erscheinung treten. Er kann ebenso ein imaginärer Konvergenzpunkt sein, z.B. wenn der Innenangriff die in Anspruch 6 genannte Form aufweist.

Ein weiterer Teil der Erfindung bezieht sich auf die Gestaltung der Schraubendreherspitze zum Einleiten und Übertragen des Drehmoments in die erfindungsgemäß gestaltete Schraube. Die Außenkontur der Schraubendreherspitze besitzt im allgemeinen eine zur räumlichen Konktur des Innen-Kraftangriffs der Schraube komplementäre Form. Somit hat der Schraubendreher im grundsätzlich die Form eines zentrischen Körpers, der mit einem Spiel in die zentrale Ausnehmung der Schraube eingreift. Die radial aus dem besagten zentrischen Körper herausragenden Flügel greifen in die Schlitze des Innen-Kraftangriffs der Schraube ein. Die Eigenschaften nach Anspruch 6 stellen einen vorteilhaften Aspekt des Schraubendrehers. Sie stellen sicher, daß die Innenkanten, die den Übergang von den Schlitzflanken zu den segmentartigen Umfangsflächen des zentralen Innen-Kraftangriffs in Umfangsrichtung des Innen-Kraftangriffs der Schraube bilden, durch die vom Schraubendreher erzeugte Kraft belastet werden.

Zweckmäßig sind es nur diese Innenkanten, die dem Kraftangriff ausgesetzt sind, wenn das Auftreten von axialen Reaktionskräften deutlich unterdrückt werden soll. Diese vorteilhafte Beschränkung der Krafteinleitung auf die Flügel der Schraubendreherspitze wird sichergestellt durch die Gestalltung der Flanken der Flügel des Schraubendrehers, wie in Anspruch 6 definiert. Die Flanken der Schraubendreher-Flügel müssen in diesem Fall nicht notwendigerweise plan sein. Sie können sogar gekrümmt sein.

Die Erfindung wird nunmehr anhand von den in den Zeichnungen dargestellten Ausführungsbeispielen erläutert. Es zeigen:
- Fig. 1: Die dreidimensionale Ansicht einer Schraube mit zylindrischem Schraubenkopf mit einem darin untergebrachten Innen-Kraftangriff für die Kraft-Übertragung.
- Fig. 2: In verkleinertem Maßstab eine Draufsicht des Schraubenkopfes in Blickrichtung des Pfeils II in Fig. 1.
- Fig. 3: einen Querschnitt durch den Schraubenkopf entsprechend der Schnittlinie III - III in Fig. 2.
- Fig. 4: einen Querschnitt analog zu Fig. 3 und entsprechend der Schnittlinie IV - IV in Fig. 2.
- Fig. 5: einen Querschnitt ähnllich Fig. 3, jedoch mit einem Sackloch am inneren Ende des Innen-Kraftangriffs.
- Fig. 6: eine Draufsicht auf den Innen-Kraftangriff in Richtung der Gewindeachse am oberen Kopfende entsprechend der Pfeilrichtung VI in Fig. 5.
- Fig. 7: eine teilperspektivische Ansicht eines Anziehwerkzeuges, nämlich eines Schraubendrehers, der zur Betätigung des gemäß der Erfindung gestalteten Schraubenkopfes geeignet ist.
- Fig. 8: eine Querschnittsdarstellung entsprechend der Schnittlinie VIII - VIII in Fig. 7 mit unterschiedlichen Gestaltungen der Flügelflanken der Schraubendreherspitze.
- Fig. 9: einen Längsschnitt durch den Schraubenkopf, entsprechend etwa der Schnittlinie III - III in Fig. 2.
- Fig.10: einen Horizontalschnitt entsprechend der Schnittlinie X - X in Fig. 9 durch den Schraubenkopf mit einer Schraubendreherspitze im Innen-Kraftangriff.

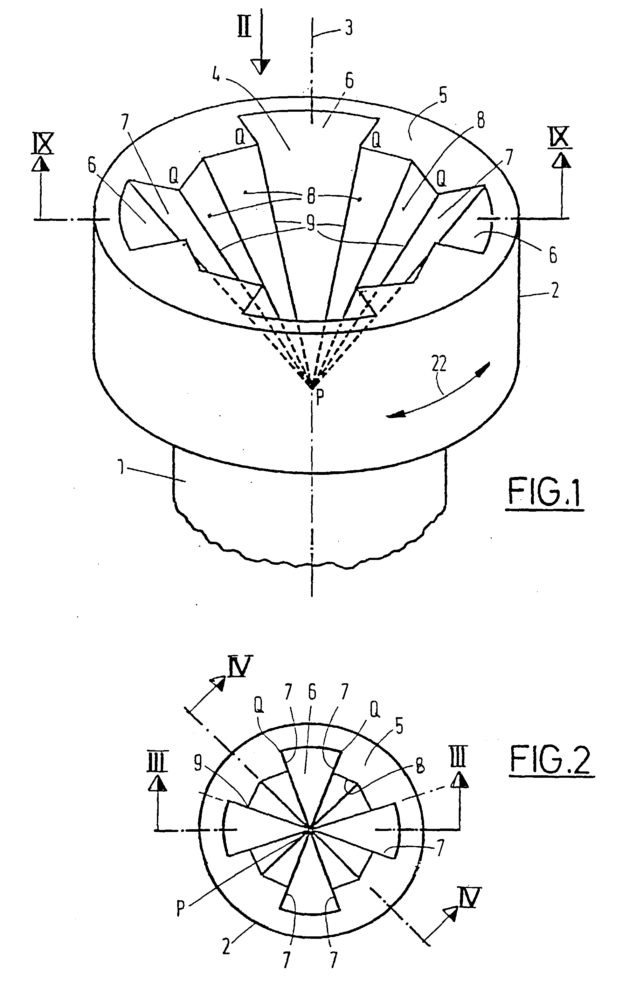

Die in Fig. 1 dargestellte Schraube umfaßt im wesentlichen den Schraubenschaft 1 mit dem (nicht abgebildeten) Gewinde und dem Schraubenkopf 2, der das Bestätigungsende der Schraube bildet. Die Gewindeachse 3 ist die Symmetrie-achse von Schaft 1 und Kopf 2. Ausgehend von der Stirnfläche 5 des Schrauben-kopfes ist ein insgesamt mit 4 bezeichneter Innen-Kraftangriff dargestellt. Der Innen-Kraftangriff 4 besteht aus einer zentralen Ausnehmung und radial nach außen verlaufenden Schlitzen 6.

Die Innenkanten 9, die in der Umfangsrichtung 22 den Übergang von den Schlitzflanken 7 zu den segmentartigen Umfangsflächen 8 der zentralen Ausneh-mung bilden, sind geradlinig ausgebildet. Typischerweise sind die segmentierten Umfangsflächen 8 in Paare unterteilt. Jede Fläche jedes Paares ist in bezug auf die andere Fläche in einem Winkel geneigt, so daß die Innenkanten 9 die innerste radiale Begrenzung des Innen-Kraftangriffs bilden und somit klar definierte Kanten für die Aufnahme von inneren Kräften bilden, die von den Flügelflächen eines Schraubendrehers aufgebracht werden. In Richtung II von der Begrenzungsfläche 5 weg konvergieren die inneren Kanten 9 zu einem gemein-samen Punkt P der Gewindeachse 3.

Die Schlitzflanken 7, die zwischen sich einen gemeinsamen Schlitz 6 bilden, konvergieren geringfügig in der der Stirnfläche 5 entgegengesetzten Richtung II, um an beiden Seiten eine Aushebeschräge für ein Preßwerkzeug zu bilden, so daß besagtes Werkzeug ohne "zu fressen" herausgezogen werden kann.

Der Neigungswinkel jeder der Schlitzflanken 7 beträgt etwa 1,5° bis 2° zur Gewindeachse 3 und ist somit vernachlässigbar klein im Hinblick auf die geforderte Verhinderung axialer Rückschubkräfte. Anders ausgedrückt, jede der Flanken 7 liegt in einer entsprechenden Ebene, die im wesentlichen tangential zu einem imaginären Konus angeordnet ist, der koaxial zur Gewindeachse ist und dessen Spitze dem gemeinsamen Punkt P entspricht. Der imaginäre Konus erweitert sich somit vom gemeinsamen Punkt P weg nach außen in einem Winkel von etwa 1,5° bis 2° zur Gewindeachse 3.

Die imaginären Ebenen aller Schlitzflanken 7 schneiden sich auch mit der Schraubenachse 3 im Punkt P. Der Schnittpunkt zwischen den Innenkanten 9 und der Stirnfläche 5 des Schraubenkopfes ist mit Q bezeichnet.

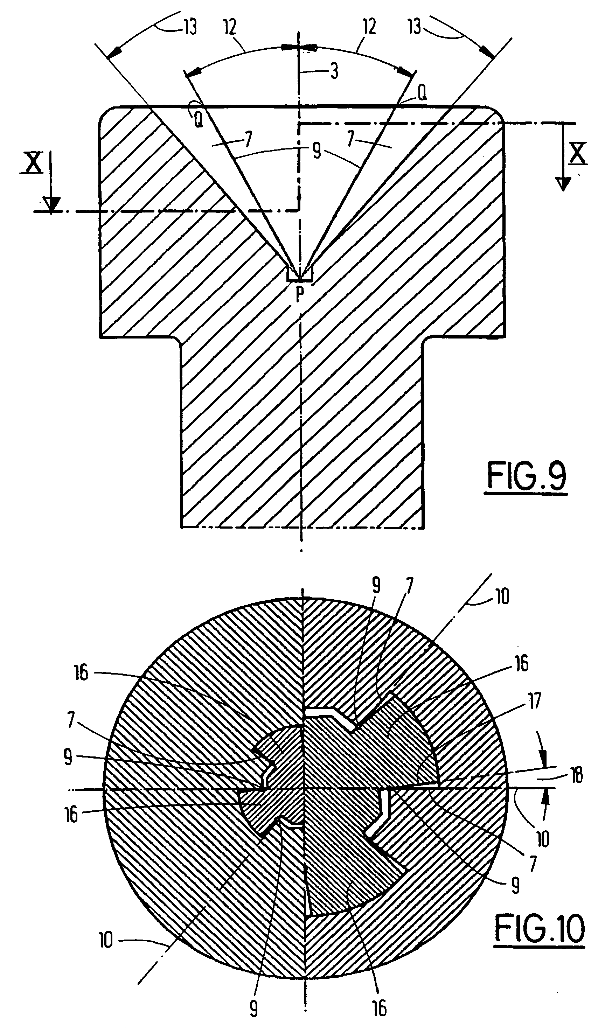

Die Umfangsflächen 8 der zentralen Ausnehmung des Innen-Kraftangriffs, die zwischen den Schlitzen 6 in der Umfangsrichtung 22 liegen, sind Oberflächen einer imaginären regelmäßigen Pyramide, deren Achse mit der Gewindeachse 3 zusammenfällt und deren Spitze der auf der Gewindeachse 3 liegende Punkt P ist. Jedoch ist es auch möglich, ohne das Ziel der Erfindung zu gefährden, daß die Umfangsflächen 8 auf anderen Flächen als denen einer Pyramide liegen. Wie in Fig. 9 dargestellt, schließen in der beispielhaften Darstellung die Innenkanten 9 zusammen mit der Gewindeachse 3 einen Winkel 12 von etwa 30°, 28° ein.

Die Außenflächen der Schlitze 6 sind Sektoren der Oberfläche eines imaginären Kegels oder einer imaginären regelmäßigen Pyramide, deren Achse mit der Gewindeachse 3 zusammenfällt und deren Kegelspitze mit dem Punkt P auf der Achse 3 zusammenfällt. Der Winkel 13 der Kegelspitze ist in Fig. 9 dargestellt.

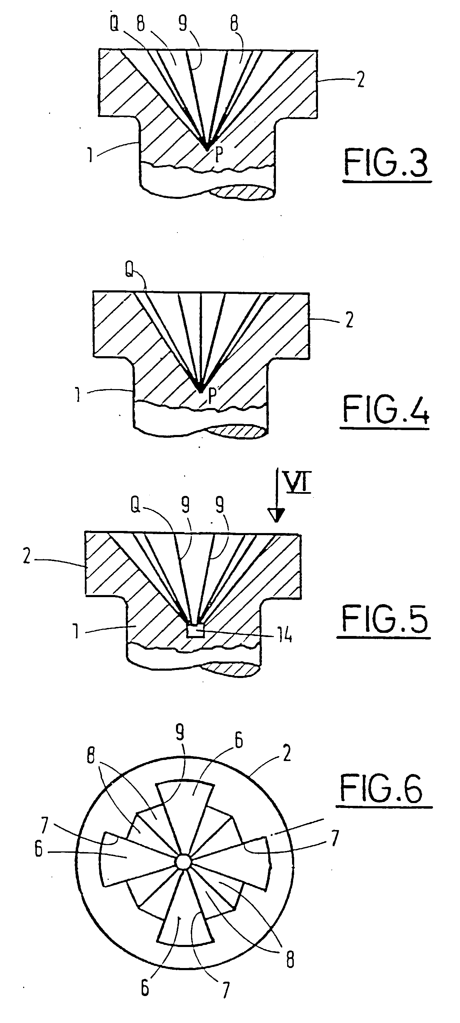

Wie in Fig. 5 dargestellt, kann der Punkt P auf der Gewindeachse 3 auch als imaginärer Punkt auf der Achse des Sacklochs 14 und im Sackloch 14 liegen. Das Sackloch 14 bildet das Ende am Grund des Innen-Kraftangriffs 4.

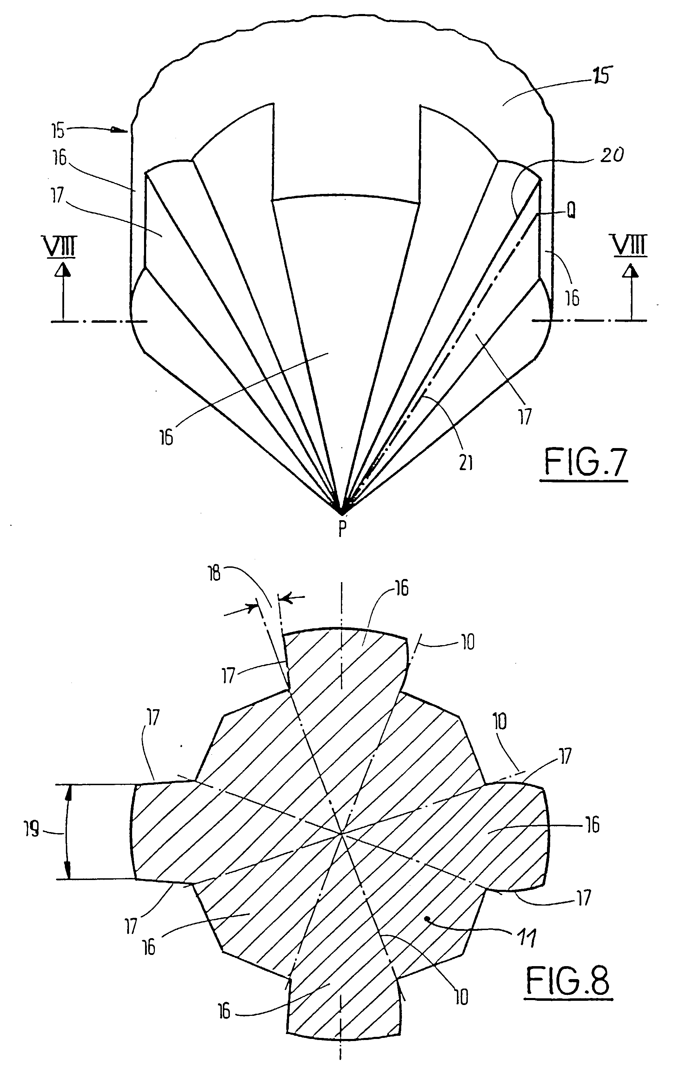

Unter Bezugnahme auf Fig. 7 und 8 beinhaltet die Schraubendreherspitze 15 einen zentrischen Abschnitt 11, aus welchem radial vier Flügel 16 herausragen. Die äußersten Flächen der Eingriffszone der Flügel 16 sind Sektoren der Oberfläche eines Kegels mit der Spitze P. Der zentrische Abschnitt 11 besitzt acht ebene Oberflächen, je zwei zwischen jedem benachbarten Flügelpaar, wobei besagte Flächen tangentiale Flächen zu einem Konus mit der Spitze P sind mit einem Spitzenwinkel, der geringer ist als der des äußeren Kegels der Flügel; die besagten ebenen Flächen schneiden die Flanken 17 der Flügel 16 in geraden Linien 20, welche am Punkt P konvergieren.

Im Querschnitt von Fig. 8 stellen die Linien 10 axiale Bezugsebenen dar, welche die Linien 20 enthalten. Die Flanken 17 bewirken eine Verengung der Flügel in bezug auf die Flächen 10, entweder mittels eines Winkels 18 wie auf der linken Seite von Fig. 8 oder mittels einer allmählichen Krümmung nach innen wie auf der rechten Seite von Fig. 8.

Im Eingriffszustand wie in Fig. 10 dargestellt, liegen die Flügel 16 innerhalb der Schlitze 6 des Innen-Kraftangriffs 4. Wenn sie in den Innen-Kraftangriff 4 der Schraube eingeführt werden, bilden die Flügelflanken 17 zusammen mit den Schlitzflanken 7 des Innen-Kraftangriffs 4 der Schraube einen spitzen Winkel 18, der sich in Richtung auf die Gewindeachse 3 schließt. Der Winkel 18 kann relativ klein sein. Es muß lediglich sichergestellt werden, daß zwischen den Flügelflanken 17 und dem Innen-Kraftangriff ein Kontakt entlang der Innenkanten 9 hergestellt wird und daß dieser so weit als möglich auf den Bereich 9 dieser Innenkanten beschränkt wird.

Während das Montage-Werkzeug betätigt wird, haben die Flügelflanken 17 praktisch nur Kontakt mit den Innenkanten 9 des Innen-Kraftangriffs 4 im Bereich der gestrichelten Kontaktlinie 21 (Fig. 7) zwischen den dort mit q und p bezeichneten Endpunkten. Das Ende p der Linie 21 liegt auf der Schraubendreherachse 3 und bildet die Spitze des Schraubendrehers.

### Bezugszeichenliste

- 1: Schraubenschaft
- 2: Schraubenkopf
- 3: Gewindeachse
- 4: Vertiefung
- 5: Stirnseite
- 6: Schlitz
- 7: Schlitzflanke
- 8: Umfangsfläche
- 9: Innenkante
- 10: radiale Ebene
- 11: Richtung
- 12: Winkel
- 13: Kegelspitzenwinkel
- 14: Blindloch
- 15: Schraubendreherkopf
- 16: Flügel
- 17: Flügelflanken
- 18: Winkel
- 19: Winkel
- 20: Winkel
- 21: Linie

## Patentansprüche

1. Befestigungselement mit Gewinde, insbesondere Schraube, mit einer
- an einem Betätigungsende (5), insbesondere im Bereich eines über den Gewindedurchmesser hinausstehenden Kopfes (2), in Richtung der Gewindeachse (3) koaxial mit dieser eingebrachten,
- als Innenkraftangriff (4)für eine Drehmomenteinleitung nach Art eines Schraubendreherangriffes dienenden und
- ähnlich einem Kreuzschlitz wirksamen Vertiefung in Form einer Zentralausnehmung mit radial nach außen abstehenden Schlitzen (6),
- deren den Übergang von ihren Flanken (7) zu den segmentartigen Umfangsflächen (8) der Zentralausnehmung bildende Innenkanten (9)
-- geradlinig und
-- in vom Betätigungsende (5) weggewandter Richtung (II) zusammenlaufend auf einen gemeinsamen Punkt P der Gewindeachse (3) ausgerichtet sind, und
- deren einen gemeinsamen Schlitz (6) zwischen sich bildende ebene Schlitzflanken (7) in vom Betätigungsende (5) weggewandter Richtung (II) der Gewindeachse (3) nach Art etwa von Tangtentialebenen zu einem mit der Gewindeachse (3) koaxialen Konus leicht konvergieren.
dadurch gekennzeichnet,
daß die in Umfangsrichtung (22) zur Gewindeachse (3) zwischen den Schlitzen (6) liegenden Umfangsflächen (8) der Zentralausnehmung Mantelflächen einer imaginären, regelmäßigen Pyramide mit zwischen den Flanken (7) liegenden Mantelkanten sind, deren Achse mit der Gewindeachse (3) zusammenfallen und deren Spitze mit dem auf der Gewindeachse (3) liegenden gemeinamen Punkt P zusammenfällt, so daß die Innenkanten (9) die der Gewindeachse (3) nächststehenden Teile der Begrenzungswände der Vertiefung (4) sind.

2. Befestigungselement nach Anspruch 1,
dadurch gekennzeichnet,
daß die Ebenen der Schlitzflanken (7) einen Schrägungswinkel von etwa 1,5°- 2° mit der Gewindeachse (3) einschließen.

3. Befestigungselement nach einem der Ansprüche 1 oder 2
dadurch gekennzeichnet,
daß sich die Ebenen sämtlicher Schlitzflanken (7) in dem auf der Schraubenachse (3) liegenden Punkt P schneiden.

4. Befestigungselement nach einem oder mehreren der vorhergehenden Ansprüche,
dadurch gekennzeichnet,
daß der Punkt P innerhalb des Schraubenkopfes 2 liegt.

5. Befestigungselement nach einem oder mehreren der vorhergehenden Ansprüche,
dadurch gekennzeichnet,
daß der den Begrenzungskanten und/oder den Begrenzungsflächen des Innenkraftangriffes (4) gemeinsame Punkt P als imaginärer Punkt auf der Achse eines den bodenseitigen Abschluß der Vertiefung (4) bildenden, mit der Gewindeachse (3) koaxialen Blindloches (14) - vorzugsweise innerhalb des Blindloches (14) - liegt.

6. Schraubendreher, dessen Werkzeugkopf (15) mehrere gleichmäßig über den Umfang seines zentrischen Abschnittes (11) verteilt im wesentlichen radial nach außen stehende Flügel (16) mit auf etwa dem Mantel eines geraden Kegels mit der Spitze P liegenden Außenflächen aufweist und dessen Achse koaxial zur Werkzeugachse verläuft,
dadurch gekennzeichnet,
daß die zwischen benachbarten Flügeln (16) liegenden Umfangsteile des zentrischen Abschnittes (11) zwei etwa gleichgroße, aneinandergrenzende, ebene Flächen sind,
die die Mantelflächen einer imaginären regelmäßigen Pyramide mit mittig zwischen den Flügeln (16) liegenden Mantelkanten bilden,
- wobei die Pyramidenachse mit der Werkzeugachse und die Pyramidenspitze mit der Kegelspitze P zusammenfallen.

7. Werkzeug nach Anspruch 6,
dadurch gekennzeichnet,
daß die Flanken (17) der Flügel (16) eben sind.

8. Werkzeug nach Anspruch 7,
dadurch gekennzeichnet,
daß die Flanken (17) der Flügel (16) nahezu parallel zueinander verlaufen derart, daß sie einen spitzen, sich in Richtung auf die Werkzeugspitze schließenden Winkel (18) mit einer die Werkzeugachse enthaltenden Radialebene bilden.

9. Werkzeug nach Anspruch 6,
dadurch gekennzeichnet,
daß die Flanken (17) der Flügel (16) konvex gekrümmt sind.

10. Kombination eines Befestigungselements nach einem der Ansprüche 1 bis 5 mit einem Werkzeug nach einem der Ansprüche 6 bis 9.

## Claims

1. Threaded fastening element, in particular screw, having a depression
- formed at an actuating end (5), in particular in the region of a head (2) projecting beyond the thread diameter in the direction of the thread axis (3), coaxially therewith,
- serving as a point of application (4) of interior forces for introducing a torque in the manner of a screwdriver application and
- acting in the manner of a cross slot in the form of a central recess with slots (6) projecting radially outwards,
- whose inner edges (9) forming the transition from their flanks (7) to the segment-like circumferential surfaces (8) of the central recess
-- are straight and
-- are aligned running together in a direction (II) facing away from the actuating end (5) to a common point P on the thread axis (3), and
- whose planar slot flanks (7) forming a common slot (6) between them converge slightly in a direction (II) of the thread axis (3) facing away from the actuating end (5) approximately in the manner of tangential planes to form a cone which is coaxial with the thread axis (3),
characterized in that
the circumferential surfaces (8), lying between the slots (6) in the circumferential direction (22) to the thread axis (3), of the central recess are outer surfaces of an imaginary regular pyramid with outer edges lying between the flanks (7), whose axis coincides with the thread axis (3) and whose tip coincides with the common point P lying on the thread axis (3) so that the inner edges (9) are the parts of the boundary walls of the depression (4) located nearest to the thread axis (3).

2. Fastening element according to Claim 1,
characterized in that
the planes of the slot flanks (7) enclose a slope angle of about 1.5°-2° with the thread axis (3).

3. Fastening element according to either of Claims 1 and 2,
characterized in that
the planes of all the slot flanks (7) intersect in the point P lying on the screw axis (3).

4. Fastening element according to one or more of the preceding claims,
characterized in that
the point P lies within the screw head 2.

5. Fastening element according to one or more of the preceding claims,
characterized in that
the point P which is common to the boundary edges and/or the boundary surfaces of the point of application (4) of interior forces lies as an imaginary point on the axis of a blind hole (14) - preferably within the blind hole (14) - forming the bottom termination of the depression (4) and coaxial with the thread axis (3).

6. Screwdriver whose tool head (15) has a plurality of wings (16), which are distributed evenly over the circumference of its central portion (11), protrude essentially radially outwards and have outer surfaces lying approximately on the outside of a straight cone with the tip P, and whose axis runs coaxially with the tool axis,
characterized in that
the circumferential parts, lying between adjacent wings (16), of the central portion (11) are two planar surfaces which are approximately equal in size, adjoin one another, and form the outer surfaces of an imaginary regular pyramid with outer edges lying centrally between the wings (16),
- the pyramid axis coinciding with the tool axis and the pyramid tip with the cone tip P.

7. Tool according to Claim 6,
characterized in that
the flanks (17) of the wings (16) are planar.

8. Tool according to Claim 7,
characterized in that
the flanks (17) of the wings (16) run virtually parallel to one another in such a way that they form an acute angle (18), closing in the direction of the tool tip, with a radial plane containing the tool axis.

9. Tool according to Claim 6,
characterized in that
the flanks (17) of the wings (16) are convexly curved.

10. Combination of a fastening element according to any one of Claims 1 to 5 with a tool according to any one of Claims 6 to 9.

## Revendications

1. Élément de fixation à pas de vis, en particulier vis, comprenant un évidement :
- ménagé à une extrémité d'actionnement (5), en particulier dans la région d'une tête (2) qui dépasse au-delà du diamètre du pas de vis et agencé coaxialement à ladite tête en direction de l'axe (3) du pas de vis,
- qui sert d'élément d'attaque intérieur (4) pour appliquer un couple de rotation, à la manière de l'empreinte pour un tournevis,
- agissant à la manière d'une empreinte pour tournevis cruciforme, et
- sous forme d'un évidement central avec des fentes (6) qui dépassent radialement vers l'extérieur,
dans lequel les arêtes intérieures (9), qui forment la transition depuis leurs flancs (7) vers les surfaces périphériques (8) analogues à des segments de l'évidement central, sont rectilignes et dirigées dans une direction (11) détournée de l'extrémité d'actionnement (5) en convergeant vers un point commun P de l'axe (3) du pas de vis, et dans lequel les flancs plats (7) des fentes qui forment entre eux une fente commune (6) convergent légèrement dans la direction (11) de l'axe (3) du pas de vis à l'opposé de l'extrémité d'actionnement (5) à la manière de plan tangentiels pour former un cône coaxial à l'axe (3) du pas de vis,
caractérisé en ce que
les surfaces périphériques (8) de l'évidement central, situées entre les fentes (6) dans la direction périphérique (22) par rapport à l'axe (8) du pas de vis, sont des surfaces enveloppe d'une pyramide imaginaire régulière avec des arêtes enveloppe situées entre les flancs (7), dont l'axe coïncide avec l'axe (3) du pas de vis et dont la pointe coïncide avec le point commun P situé sur l'axe (3) du pas de vis, de sorte que les arêtes intérieures (9) sont les parties des parois de délimitation de l'évidement (4) qui sont les plus proches de l'axe (3) du pas de vis.

2. Élément de fixation selon la revendication 1, caractérisé en ce que les plans des flancs (7) des fentes forment un angle d'environ 1,5° à 2° avec l'axe (3) du pas de vis.

3. Élément de fixation selon l'une ou l'autre des revendications 1 et 2, caractérisé en ce que les plans de tous les flancs (7) des fentes se coupent au point P situé sur l'axe (3) du pas de vis.

4. Élément de fixation selon l'une ou plusieurs des revendications précédentes, caractérisé en ce que le point P est situé à l'intérieur de la tête (2) de vis.

5. Élément de fixation selon l'une ou plusieurs des revendications précédentes, caractérisé en ce que le point commun P aux arêtes de délimitation et/ou aux surfaces de délimitation de l'élément d'attaque intérieur (4) est situé, en tant que point imaginaire, sur l'axe d'un perçage borgne (14) qui forme la fermeture du côté du fond de l'évidement (4) et coaxial à l'axe (3) du pas de vis, de préférence à l'intérieur du perçage borgne (14).

6. Tournevis, dont la tête à outil (15) comporte plusieurs ailes (16) réparties régulièrement sur la périphérie de son tronçon central (11) et dépassant sensiblement radialement vers l'extérieur, comportant des surfaces extérieures situées approximativement sur l'enveloppe d'un cône droit présentant la pointe P, et dont l'axe s'étend coaxialement à l'axe d'outil, caractérisé en ce que les parties périphériques du tronçon central (11), situées entre des ailes voisines (16), sont des surfaces planes approximativement de même taille et mutuellement juxtaposées, qui forment les surfaces enveloppe d'une pyramide imaginaire régulière avec des arêtes enveloppe situées au milieu entre les ailes (16), et dans lequel l'axe de la pyramide coïncide avec l'axe d'outil et la pointe de la pyramide coïncide avec la pointe P du cône.

7. Outil selon la revendication 6, caractérisé en ce que les flancs (17) des ailes (16) sont plans.

8. Outil selon la revendication 7, caractérisé en ce que les flancs (17) des ailes (16) s'étendent pratiquement parallèlement les uns aux autres, de sorte qu'il forment avec un plan radial qui contient l'axe d'outil un angle (18) aigu qui va en se fermant en direction de la pointe d'outil.

9. Outil selon la revendication 6, caractérisé en ce que les flancs (17) des ailes (16) sont incurvés de manière convexe.

10. Combinaison d'un élément de fixation selon l'une des revendications 1 à 5 avec un outil selon l'une des revendications 6 à 9.
